Europäisches Patentamt

European Patent Office

Office européen des brevets

(19)

(11) Publication number: **0 290 623**
**A1**

(12) # EUROPEAN PATENT APPLICATION
published in accordance with Art. 158(3) EPC

(21) Application number: **87907680.0**

(22) Date of filing: **20.11.87**

Data of the international application taken as a basis:

(86) International application number:
**PCT/JP87/00903**

(87) International publication number:
**WO88/03934 (02.06.88 88/12)**

(51) Int. Cl.³: **C 08 F 299/06**

(30) Priority: **21.11.86 JP 276445/86**

(43) Date of publication of application:
**17.11.88 Bulletin 88/46**

(84) Designated Contracting States:
**DE FR GB IT NL**

(71) Applicant: **NIPPON KAYAKU KABUSHIKI KAISHA**
**11-2, Fujimi 1-chome Chiyoda-ku**
**Tokyo 102(JP)**

(72) Inventor: **SASAHARA, Kazunori**
**31-1, Shimo 4-chome Kita-ku**
**Tokyo 115(JP)**

(72) Inventor: **YOKOSHIMA, Minoru**
**2291, Ino Toride-shi**
**Ibaragi 302(JP)**

(74) Representative: **Türk, Gille, Hrabal**
**Bruckner Strasse 20**
**D-4000 Düsseldorf 13(DE)**

(54) POLYURETHANE (METH)ACRYLATE MIXTURE, RESIN COMPOSITION, AND COATING AGENT.

(57) A polyurethane (meth)acrylate mixture comprising a reaction mixture among poly($\beta$-methyl-$\delta$-valerolactone) diol, an organic polyisocyanate and a hydroxy(meth)acrylate compound, and a resin composition containing the same.

EP 0 290 623 A1

DESCRIPTION


POLYURETHANE (METH)ACRYLATE MIXTURE,

RESIN COMPOSITIONS AND COATING AGENTS


Technical Field


The present invention relates to a novel polyurethane (meth)acrylate mixture, a resin composition or coating agent comprising it for an optical glass fiber in use for optical transmission.


Background Art

An optical fiber has a high information-transmitting property and is relatively insensitive to an external interference, so that in recent years its utility has remarkably increased especially in the field of communication.

The optical fiber is generally made of glass for being used in the field of communication. A glass fiber, however, is very troublesome to handle because it is frangible by nature and may be easily broken by a chemical attack of steam. Therefore, the optical glass fiber is usually coated with a resin on its surface. Epoxy resin, urethane resin and the like have been used as such coating material, but these resins have such disadvantages that the productivity of the coating is poor since a long time is required for their curing and that the resultant coating is so inflexible as to be impaired in transmitting property by lateral pressure. For the purpose of overcoming these disadvantages, extensive studies have been made on ultraviolet-curing compositions containing urethane acrylate. For example, the ultraviolet-curing compositions for the optical glass fiber and the methods for forming a coating therefrom have been disclosed in the Japanese Patent Application Laying Open (KOKAI) Nos. 58-223638 and 59-170154.

The presently used ultraviolet-curing compositions have the advantages that they may be speedily cured and that the desired characteristics can be obtained with ease and accuracy. On the other hand, they have such disadvantages that the glass fibers are liable to be adversely affected by water because of a high water absorbability of the cured compositions and that the physical properties of the cured compositions may be changed in a cycle according to a temperature which varies between -60°C and +80°C so as to cause an increase of transmission loss.

Disclosure of Invention

Through energetic efforts, the present inventors have succeeded in synthesizing a novel polyurethane (meth)acrylate mixture and in providing, by using such polyurethane (meth)acrylate mixture, a novel resin composition suited in use for coating the optical glass /

fiber for optical transmission. The resin composition according to the present invention may be rapidly cured, and the resulting coating is flexible and little absorbable of water. Furthermore, the coating thus obtained changes little in physical properties over a wide temperature range and has a low glass transition temperature.

Thus, the present invention relates to:

(1)  a polyurethane (meth)acrylate mixture which is a reaction product of poly($\beta$-methyl-$\delta$-valerolactone)diol (preferably the one having an average molecular weight of 500 to 5,000), organic polyisocyanate and a hydroxy (meth)acrylate compound;

(2)  a resin composition comprising a polyurethane (meth)acrylate mixture which is a reaction product of poly($\beta$-methyl-$\delta$-valerolactone)diol (having an average molecular weight of 500 to 5,000), organic polyisocyanate and a hydroxy (meth)acrylate compound; and

(3)  a coating agent for an optical glass fiber, comprising a polyurethane (meth)acrylate mixture which is a reaction product of poly($\beta$-methyl-$\delta$-valerolactone)diol (having an average molecular weight of 500 to 5,000), organic polyisocyanate and a hydroxy (meth)acrylate compound.

The polyurethane (meth)acrylate mixture of this invention may be prepared by urethanating poly($\beta$-methyl-$\delta$-valerolactone)diol (having an average molecular weight of preferably 500 to 5,000) and organic polyisocyanate, and (meth)acrylating the resulting product with a hydroxy (meth)acrylate compound, or alternatively by reacting the organic polyisocyanate with the hydroxy (meth)acrylate compound and further reacting the resulting product with the poly($\beta$-methyl-$\delta$-valerolactone)diol.

The poly($\beta$-methyl-$\delta$-valerolactone)diol used as a starting material of the polyurethane (meth)acrylate mixture of this invention can be prepared, for example, in the following way: $\beta$-methyl-$\delta$-valerolactone is subjected to ring-opening polymerization in the presence of a polymerization initiator of a polyhydric alcohol such as ethylene glycol, propylene glycol, butanediol, neopentyl glycol, 1,6-hexanediol, 1,4-bis(hydroxymethyl)cyclohexane, 2-methylpropanediol, 1,8-octanediol or the like. Such poly($\beta$-methyl-$\delta$-valerolactone)diol is commercially available without difficulty. For example, PMVL 1000, PMVL 2000 and PMVL 3000, made by KURARAY Co., Ltd., may be mentioned as the above diols. Examples of the organic polyisocyanate usable for said reaction are isophorone diisocyanate, hexamethylene diisocyanate, 2,2,4-trimethylhexamethylene diisocyanate, 2,4,4-trimethylhexamethylene diisocyanate, tolylene diisocyanate, xylylene diisocyanate, diphenylmethane-4,4'-diisocyanate, lysine diisocyanate, and dimer acid diisocyanate. Urethanation of the poly($\beta$-methyl-$\delta$-valerolactone)diol and the organic polyisocyanate may be carried out preferably at 30 to 100°C, more preferably at 50 to 80°C. In this reaction, the organic polyisocyanate may be

0290623

used in an amount of preferably 1 to 2 moles, more preferably 1.2 to 2 moles against one mole of the poly($\beta$-

methyl-$\delta$-valerolactone)diol.  Illustrative examples of the hydroxy (meth)acrylate compound usable in said reaction are hydroxyethyl (meth)acrylate, hydroxypropyl (meth)acrylate,

and $\epsilon$-captrolactone-$\beta$-hydroxyethyl (meth)acrylate addition products (such as PLACCEL FA-1, PLACCEL FM-1, PLACCEL FA-2, mfd. by DAICEL CHEMICAL INDUSTRIES, LTD.).  In the (meth)acrylating reaction, the hydroxy (meth)acrylate compound is reacted with the isocyanate-terminated compound obtained in the urethanation such that the former is used in an amount equal to or slightly more than that which is necessary for (meth)acrylating the terminal isocyanate group of the latter.  The (meth)acrylation may be carried out in the presence of a known catalyst such as a tertiary amine, dibutyltin dilaurate, dioctyltin dilaurate or the like for promoting the reaction between isocyanate groups and hydroxyl groups.  It is also desirable to add a polymerization inhibitor such as hydroquinone, hydroquinone monomethyl ether, methylhydroquinone, p-benzoquinone, phenothiazine or the like in an amount of 50 to 2,000 ppm (based on the isocyanate-terminated compound) prior to the reaction in order to prevent gelation caused by radical polymerization in the course of the reaction.  The reaction temperature is preferably 60 to 90°C.

When preparing the polyurethane (meth)acrylate mixture by reacting the organic polyisocyanate with the hydroxy (meth)acrylate compound and then further reacting the product with the poly(β-methyl-δ-valerolactone)diol, an amount of the organic polyisocyanate to be used may be changed according to a type thereof. For instance, in case of using organic diisocyanate, it is preferred to react the hydroxy (meth)acrylate compound in an approximately equimolar amount to said organic diisocyanate. The reaction between the organic polyisocyanate and hydroxy (meth)acrylate can be carried out in the same way as the above (meth)acrylating reaction. The poly(β-methyl-δ-valerolactone)diol, when reacted with the reaction product of the organic polyisocyanate and hydroxy (meth)acrylate compound, is preferably used in an amount of about one mole against 2 moles of said reaction product, and the reaction temperature is preferably 30 to 100°C, more preferably 50 to 80°C.

In the resin composition or coating agent (both being hereinafter referred to also as "composition") of this invention, the polyurethane (meth)acrylate mixture is present in a range of preferably 20 to 80% by weight, more preferfably 30 to 70% by weight of the composition.

In the composition of this invention, the polyurethane acrylate mixture is preferred to the polyurethane methacrylate mixture.

In the composition of this invention, various known ethylenic unsaturated compounds may be contained in addition to the polyurethane (meth)acrylate mixture. Examples of such ethylenic unsaturated compounds include epoxy (meth)acrylates such as (meth)acrylates of bisphenol A epoxy resins and (meth)acrylates of bisphenol F epoxy resins, polycarbonate (meth)acrylates such as (meth)acrylates of polycarbonatediols having 1,6-hexanediol as a diol component, and phenyloxy (or alkylphenyloxy)polyethoxy (meth)acrylate, phenyloxy (or alkylphenyloxy)polypropoxy (meth)acrylate, nonylphenyloxypolyethoxy (meth)acrylate, phenyloxy (or alkylphenyloxy)ethoxy (meth)acrylate, phenyloxy (or alkylphenyloxy)propoxy (meth)acrylate, (meth)acrylates of ε-caprolactone addition products of tetrahydrofurfuryl alcohol (KAYARAD TC-110S, KAYARAD TC-120, etc., made by NIPPON KAYAKU Co., Ltd.), ε-caprolactone-β-hydroxyethyl (meth)acrylate addition products (PLACCEL FA-1, PLACCEL FM-1, etc., made by DAICEL CHEMICAL INDUSTRIES, LTD.), and (meth)acrylates of ε-caprolactone addition products of polyethoxy or polypropoxy compounds of nonyl phenol. The particularly preferred ethylenic unsaturated compounds are the acrylates of ε-caprolactone addition products of tetrahydrofurfuryl alcohol (KAYARAD TC-110S made by NIPPON KAYAKU Co., Ltd.), acrylates of polyethoxy compounds of nonyl phenol, acrylates of ε-caprolactone addition products of polyethoxy or polypropoxy compounds of nonyl phenol. The ethylenic unsaturated compounds may be used either singly or as a mixture thereof in an optional ratio. Such ethylenic unsaturated compounds are preferably used in an amount between 20 and 80% by weight, preferably 25 to 70% by weight of the composition. These ethylenic unsaturated compounds can be synthesized by a known method or easily available on the market. The composition of this invention may be cured in a known manner, for example, by irradiation of ultraviolet light. In case of curing the composition by irradiation of ultraviolet light, it is necessary to use a photo-polymerization initiator.

Any known photo-polymerization initiator which is stable in the composition during storage may be used in this invention. As examples of such photo-polymerization initiator, there may be mentioned benzoin alkyl ethers such as benzoin ethyl ether, benzoin butyl ether and benzoin propyl ether, acetophenones such as 2,2-diethoxyacetophenone and 4'-phenoxy-2,2-dichloro-acetophenone, propiophenones such as 2-hydroxy-2-methyl-propiophenone, 4'-isopropyl-2-hydroxy-2-methyl-propiophenone, 4'-isopropyl-2-methyl-propiophenone and 4'-dodecyl-2-hydroxy-2-methyl-propiophenone, benzyl-dimethylketal, 1-hydroxycyclohexylphenyl ketone, anthraquinones such as 2-ethyl-anthraquinone and 2-chloroanthraquinone, and thioxanthones. Benzyldimethylketal, 1-hydroxycyclohexyl phenyl ketone and the like are especially preferred. These photo-polymerization initiators may be used either singly or as a mixture therfeof in an optional ratio. The photo-polymerization initiator is present in an amount between 0.1 and 10% by weight, preferably 1 to 5% by weight of the composition. The composition of this invention may contain, if desired, a modifying resin and/or various types of additives. As the modifying resin, there may be mentioned epoxy resins, polyurethane, polybutadiene, polyether, polyamidoimide, silicone resin, phenol resin and the like. The content of such modifying resin preferfably ranges from 0 to 15% by weight, more preferably 0 to 5% by weight of the composition. As the additives, there may be mentioned organosilicon compounds such as γ-methacryloxypropyltrimethoxysilane, vinyl-triacetoxysilane, surface active agents (e.g. SH-3749 made by Toray Silicon Co., Ltd.), and polymerization inhibitors (such as methoquinone and methylhydroquinone). Preferably, the organosilicon compound and the polymerization inhibitor are used in an amount of 0 to 3% and 0 to 1% by weight of the composition, respectively. When coating the optical glass fiber with the coating agent according to this invention, die-coating may be suitably utilized. Wire drawing of the optical glass fiber may be accomplished at such a high rate as of 3 to 7 m/sec.

The thickness of the coating agent on the optical glass fiber according to this invention is not specifically limited, about 20 to 300 μ being, however, usually preferred. The coating agent of this invention may be easily cured by ultraviolet irradiation in a conventional manner.  For example, a low-pressure or high-pressure
mercury lamp, or a xenon lamp  may be used in the
ultraviolet irradiation.

Examples

The present invention will be described below in
further detail with reference  to the Examples thereof, in
which all "parts" means those by weight unless otherwise
noted.

[ Examples of polyurethane (meth)acrylate mixture ]
Example 1

747 parts of poly( β-methyl-δ-valerolactone)diol
(PMVL 2000 made by KURARAY Co., Ltd., having an average
molecular weight of 2,000, prepared by the ring-opening
polymerization of β-methyl-δ-valerolactone in the presence
of ethylene glycol as a polymerization initiator) and 164.5
parts of isophorone diisocyanate were supplied into a
2-litre reactor equipped with a stirrer, temperature
controller, thermometer and condenser.

The mixture was reacted while maintaining a
reaction temperature at 75-80°C.  The reaction was continued
till the completion thereof indicated by 3.4% of free
isocyanate groups.  It took 8 hours from feeding the reactor
to finishing the reaction.  Then, 91.7 parts of
2-hydroxyethyl acrylate, 0.5 part of methoquinone and 0.1
part of di-n-butyltin dilaurate were feeded into the reaction mixture under stirring and further reacted at 75-80°C. This reaction was continued till the completion thereof indicated by about 0.3% or less of free isocyanate groups. The reaction product obtained was light-yellow in color and had a viscosity of 500 P (at 40°C) and refractive index of 1.4822 (at 20°C).

Example 2

506.5 parts of the same poly(β-methyl-δ-valerolactone)diol as in Example 1 and 83.5 parts of isophorone diisocyanate were supplied into the same reactor and reacted under the same conditions as in Example 1, the reaction being continued till the completion thereof indicated by 1.79% of free isocyanate groups. Then, 83.9 parts of an ε-caprolactone-β-hydroxyethyl acrylate addition product (PLACCEL FA-2) and 0.3 part of methoquinone were supplied into the reactor and reacted at 75-80°C. The reaction product was light-yellow in color and had a viscosity of 1,760 P (at 40°C) and refractory index of 1.4810 (at 20°C).

Example 3

1,200 parts of poly(β-methyl-δ-valerolactone)diol (PMVL 3000 made by KURARAY Co., Ltd., having an average molecular weight of 3,000, prepared by the ring-opening polymerization of β-methyl-δ-valerolactone in the presence of ethylene glycol as a polymerization initiator) and 150 parts of diphenylmethane-4,4'-diisocyanate were supplied
into the same reactor and reacted under the same conditions
as in Example 1, the reaction being continued till the
completion thereof indicated by 1.24% of free isocyanate
groups.  This was followed by an additional feed of 26.8
parts of 2-hydroxypropyl acrylate and 0.3 part of
methoquinone, and a further reaction at 75-80°C.  The
reaction product had a viscosity of 6,000 P (at 40°C) and
refractive index of 1.5015 (at 20°C).


Example 4

     1,000 parts of the same poly(β-methyl-δ-
valerolactone)diol as in Example 1, 304 parts of the
compound obtained by reacting 1 mole of 2-hydroxyethyl
methacrylate with 1 mole of tolylene diisocyanate (NCO
concentration: 13.8%), and 0.6 part of methoquinone were
supplied into the same reactor as used in Example 1, and the
mixture was reacted while maintaining a temperature at
75-80°C.  The resulting reaction product had a viscosity of
450 P (at 40°C) and refractive index of 1.5000 (at 20°C).


Example 5

     1504.83 parts of the same poly(β-methyl-δ-
valerolactone)diol as in Example 1 and 232.36 parts of a
mixture of 2,4,4-trimethylhexamethylene diisocyanate and
2,2,4-trimethylhexamethylene diisocyanate were supplied into
the same reactor and reacted under  the same conditions as in Example 1, the reaction being continued till the end thereof indicated by 1.78% of free isocyanate groups.  Then, 260.82 parts of an ε-caprolactone-β-hydroxyethyl acrylate addition product (PLACCEL FA-2) and 1.0 part of methoquinone were supplied into the reactor and further reacted at 75-80°C.  The reaction product was light-yellow in color and had a viscosity of 180 P (at 80°C).

[Examples of resin compositions]

Example 6

70 parts of the polyurethane acrylate mixture obtained in Exmaple 1, 30 parts of an acrylate of an ε-caprolactone addition product of tetrahydrofurfuryl alcohol (KAYARAD TC-110S), 5 parts of 1-hydroxycyclohexyl phenyl ketone (Irgacure 184 made by Ciba Geigy Co.) and 0.01 part of methoquinone were mixed to prepare a resin composition A, the properties of a cured product of which are shown in Table 1.

Example 7

40 parts of the polyurethane acrylate mixture obtained in Example 2, 60 parts of a monoacrylate of a 2-mole ε-caprolactone addition product of an adduct obtained by adding 4 moles of ethylene oxide to nonyl phenyl, 5 parts of benzyldimethylketal (Irgacure 651 made by Ciba Geigy Co.) and 0.01 part of methoquinone were mixed to prepare a resin composition B, the properties of a cured product of which are shown in Table 1.


Example 8

40 parts of the polyurethane acrylate mixture obtained in Example 3, 30 parts of a monoacrylate of an adduct of 7 moles of ethylene oxide to nonyl phenol, 30 parts of an ε-caprolactone-β-hydroxyethyl acrylate addition product (PLACCEL FA-2), 5 parts of 1-hydroxycyclohexyl phenyl ketone and 0.01 part of methoquinone were mixed to prepare a resin composition C, the properties of a cured product of which are shown in Table 1.


Example 9

10 parts of the polyurethane acrylate mixture obtained in Example 4, 40 parts of the polyurethane acrylate mixture obtained in Example 1, 50 parts of a monoacrylate of a 2-mole ε-caprolactone addition product of an adduct obtained by adding 4 moles of ethylene oxide to nonyl phenol, 5 parts of 1-hydroxycyclohexyl phenyl ketone and 0.01 part of methoquinone were mixed to prepare a resin composition D, the properties of a cured product of which are shown in Table 1.


Example 10

40 parts of the polyurethane acrylate mixture obtained in Example 5, 60 parts of a monoacrylate of a 2-mole ε-caprolactone addition product of an adduct of 4 moles of ethylene oxide to nonyl phenol, 3 parts of 1-hydroxycyclohexyl phenyl ketone and 0.01 part of methylhydroquinone were mixed to prepare a resin composition E, the properties of a cured product of which are shown in Table 1.

[Comparative example]

For the sake of comparison, the properties of a cured product of an ultraviolet-curing coating composition for optical fiber "Desoto 950 x 065", which is commercially available from Desoto Chemical Co., Ltd., was shown in Table 1 as a resin composition F.

Table 1

|  |  | Resin composition | | | | | |
|---|---|---|---|---|---|---|---|
|  |  | A | B | C | D | E | F |
| Hardness (Shore A) |  | 62 | 45 | 52 | 51 | 35 | 50 |
| Glass transition point (°C) |  | -40 | -55 | -53 | -45 | -50 | -25 |
| Young's modulus (Kg/cm$^2$) | 60°C | 29 | 8 | 16 | 18 | 6 | 25 |
|  | 40°C | 29 | 8 | 16 | 18 | 6 | 25 |
|  | 23°C | 29 | 8 | 16 | 18 | 6 | 25 |
|  | 0°C | 29 | 8 | 16 | 18 | 6 | 91 |
|  | -20°C | 29 | 8 | 16 | 18 | 6 | 105 |
|  | -40°C | 70 | 20 | 33 | 37 | 13 | 166 |
| Water absorption (weight increase, %) |  | 1.3 | 0.9 | 1.8 | 1.3 | 0.9 | 29.7 |

In Table 1:

Determination of Shore hardness A

   With each of the resin compositions A, B, C, D, E and F, a sheet of 250 μm in thickness was made by irradiating each composition with a light from a high pressure mercury lamp (lamp output: 2 KW) arranged 8 cm above and parallel to the moving direction of the composition (conveyor speed: 30 m/min). Hardness (Shore A) of the resultant sheets were measured according to JIS-Z2246.

Determination of glass transition point

   Samples were made under the same conditions as those for the determination of Shore hardness A described above. Glass transition point of each sample was determined by using a viscoelasto-spectrometer (mfd. by Iwamoto Co., Ltd.).

Determination of Young's modulus

   Samples were made under the same conditions as those for the determination of Shore hardness A. Young's modulus ($kg/cm^2$) of each sample was measured with a change of a temperature.

Determination of water absorption

   Samples were made under the same conditions as those for the determination of Shore hardness A. Each sample was immersed in pure water at 20°C for 24 hours. Its weight was measured before and after the immersion, the weight increase due to water absorption being shown by %.

Example 11

The base material for optical glass fiber was heated to about 2,000°C and spun into optical glass fibers having an outer diameter of 125 microns at a rate of 5 m/sec. In the succeeding step, said optical glass fibers were coated with the resin compositions A to E respectively by die coating. The compositions were then irradiated with an ultraviolet light from a 2 KW-high pressure mercury lamp so as to be cured. The coated optical glass fiber with any of the resin compositions A-E showed no change in transmission loss even to -60°C.

Industrial Applicability

The novel resin compositions or coating agents of this invention may be cured quickly. The resulting coating is flexible and have a low glass transition point, low water absorbability and little change in physical properties over the wide range from high to low temperatures. Accordingly, they are suited in use for coating the optical glass fiber for optical transmission.

## CLAIMS

1. A polyurethane (meth)acrylate mixture which is a reaction product of poly($\beta$-methyl-$\delta$-valerolactone)diol, organic polyisocyanate and a hydroxy (meth)acrylate compound.

2. A polyurethane (meth)acrylate mixture according to claim 1, wherein the organic polyisocyanate is a compound selected from isophorone diisocyanate, hexamethylene diisocyanate, 2,2,4-trimethylhexamethylene diisocyanate, 2,4,4-trimethylhexamethylene diisocyanate, tolylene diisocyanate, xylylene diisocyanate, diphenylmethane-4,4'-diisocyanate, lysine diisocyanate or dimer acid diiooscyanate.

3. A polyurethane (meth)acrylate mixture according to claim 1, wherein the hydroxy (meth)acrylate compound is a compound selected from hydroxyethyl (meth)acrylate, hydroxypropyl (meth)acrylate or an $\epsilon$-caprolactone-$\beta$-hydroxyethyl (meth)acrylate addition product.

4. A polyurethane (meth)acrylate mixture according to claim 1, 2 or 3, wherein an average molecular weight of the poly($\beta$-methyl-$\delta$-valerolactone)diol is 500 to 5,000.

5. A resin composition comprising a polyurethane (meth)acrylate mixture which is a reaction product of poly(β-methyl-δ-valerolactone)diol (having an average molecular weight of 500 to 5,000), organic polyisocyanate and a hydroxy (meth)acrylate compound.

6. A resin composition comprising (A) a polyurethane (meth)acrylate mixture which is a reaction product of poly(β-methyl-δ-valerolactone)diol (having an average molecular weight of 500 to 5,000), organic polyisocyanate and a hydroxy (meth)acrylate compound, (B) an ethylenic unsaturated compound other than (A), and (C) a photo-polymerization initiator as an optional component.

7. A resin composition according to claim 6, wherein the organic polyisocyanate is a compound selected from isophorone diisocyanate, hexamethylene diisocyanate, 2,2,4-trimethylhexamethylene diisocyanate, 2,4,4-trimethylhexamethylene diisocyanate, tolylene diisocyanate, xylylene diisocyanate, diphenylmethane-4,4'-diisocyanate, lysine diisocyanate or dimer acid diisocyanate.

8. A resin composition according to claim 6, wherein the hydroxy (meth)acrylate compound is a compound selected from hydroxyethyl (meth)acrylate, hydroxypropyl (meth)acrylate or an ε-caprolactone-β-hydroxyethyl
(meth)acrylate addition product.

9. A resin composition according to claim 6,
wherein the ethylenic unsaturated compound (B) other than
(A) is a compound selected from epoxy (meth)acrylate,
polycarbonate (meth)acrylate, phenyloxy (or
alkylphenyloxy)polyethoxy (meth)acrylate, phenyloxy (or
alkylphenyloxy)polypropoxy (meth)acrylate,
nonylphenyloxypolyethoxy (meth)acrylate, phenyloxy (or
alkylphenyloxy)ethoxy (meth)acrylate, phenyloxy (or
alkylphenyloxy)propoxy (meth)acrylate, (meth)acrylate of an
ε-caprolactone addition product of tetrahydrofurfuryl
alcohol, an ε-caprolactone-β-hydroxyethyl (meth)acrylate
addition product, or (meth)acrylate of an ε-caprolactone
addition product of a polyethoxy or polypropoxy compound of
nonyl phenol.

10. A resin composition according to claim 6, 7, 8
or 9, wherein in the composition the polyurethane
(meth)acrylate mixture (A) is present in an amount between
20 and 80% by weight, the ethylenic unsaturated compound (B)
other than (A) is present in an amount between 20 and 80% by
weight, and the photo-polymerization initiator (C) is
present in an amount between 0.1 and 10% by weight.

0290623

11. A resin composition according to claim 5 for use in coating an optical glass fiber.

12. A resin composition according to claim 6 or 7 for use in coating an optical glass fiber.

13. A resin composition according to claim 8 for use in coating an optical glass fiber.

14. A resin composition according to claim 9 for use in coating an optical glass fiber.

15. A resin composition according to claim 10 for use in coating an optical glass fiber.

# INTERNATIONAL SEARCH REPORT

International Application No   PCT/JP87/00903

## I. CLASSIFICATION OF SUBJECT MATTER (if several classification symbols apply, indicate all) 3

According to International Patent Classification (IPC) or to both National Classification and IPC

Int.Cl$^4$   C08F299/06

## II. FIELDS SEARCHED

### Minimum Documentation Searched 4

| Classification System | Classification Symbols |
|---|---|
| IPC | C08F299/00 - 299/06 |

### Documentation Searched other than Minimum Documentation to the Extent that such Documents are Included in the Fields Searched 5

| | |
|---|---|
| Jitsuyo Shinan Koho | 1947 - 1987 |
| Kokai Jitsuyo Shinan Koho | 1973 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, A, 56-67322 (Showa Highpolymer Co., Ltd.) 6 June 1981 (06. 06. 81) (Family: none) | 1-15 |
| Y | JP, A, 61-183309 (Westinghouse Electric Corp.) 16 August 1986 (16. 08. 86) & US, A, 4,618,632 | 1-15 |

* Special categories of cited documents: 16

"A"   document defining the general state of the art which is not considered to be of particular relevance

"E"   earlier document but published on or after the international filing date

"L"   document which may throw doubts on priority claim(s) or which is cited to establish the publication date of another citation or other special reason (as specified)

"O"   document referring to an oral disclosure, use, exhibition or other means

"P"   document published prior to the international filing date but later than the priority date claimed

"T"   later document published after the international filing date or priority date and not in conflict with the application but cited to understand the principle or theory underlying the invention

"X"   document of particular relevance; the claimed invention cannot be considered novel or cannot be considered to involve an inventive step

"Y"   document of particular relevance; the claimed invention cannot be considered to involve an inventive step when the document is combined with one or more other such documents, such combination being obvious to a person skilled in the art

"&"   document member of the same patent family

## IV. CERTIFICATION

| Date of the Actual Completion of the International Search 2 | Date of Mailing of this International Search Report 2 |
|---|---|
| January 28, 1988 (28. 01. 88) | February 15, 1988 (15. 02. 88) |

| International Searching Authority 1 | Signature of Authorized Officer 20 |
|---|---|
| Japanese Patent Office | |

Form PCT/ISA/210 (second sheet) (October 1977)